# EUROPEAN PATENT APPLICATION

(11) **EP 1 548 776 A1**
(43) Date of publication of application: **29.06.2005**
(21) Application number: 03029637.0
(22) Date of filing: 22.12.2003
(51) Int. Cl.: H01H 13/70

(54) **A key, keypad, and portable electronic device**

(71) Applicant: SIEMENS AKTIENGESELLSCHAFT, 80333 München (DE)
(72) Inventor: Santa Cruz, Carmen, DK-9000 Aalborg (DK)

(57) **Abstract**

A key (10) suitable for use in an electronic device comprises a cap portion (101) and an adjustable portion (103) under the cap portion (101, both arranged onto a support (105), wherein the said adjustable portion (103) is adapted to change its height or stiffness in response to a signal (C1, C2, C3, C4) from a control unit (28).

## Description

### Field of the invention

The invention relates to input devices, in particular keys and keypads, and to devices wherein such input devices are used.

### Background of the invention

State-of-the-art keys and keypads are not satisfying in all their aspects. If molding is used to create the keypad, the shape and number of keys has to be fixed in advance. If the keypad is implemented using other materials than plastics, basically same limitations apply. Especially due to the miniaturization of the devices, especially portable electronic devices, the design of the keys and of the keypad has become more problematic. On one hand, the keypad should have a small size in order to enable portability of the device. On the other hand, the keypad has to be large enough to enable the user to conveniently use it.

Because of these limitations which are mainly due to contructional aspects, the design freedom is not good enough for developing keys, keypads, or devices wherein such input devices are used. This has led to a widely spread use of non-optimal keys and keypads, which in turn reduces the comfort of use of such devices.

### Summary of the invention

It is an object to improve the usability of a key, or to improve user comfort when using the key, especially such as suitable for use in an electronic device. This can be achieved with a key according to independent claim 1.

Dependent claims 2 to 4 describe advantageous embodiments of the invention, where the adjustable portion in the key comprises electroactive polymer.

Dependent claims 5 to 9 describe advantageous embodiments of the invention, where the height change results from a shape change of a shaping element.

A further objective of the invention is improve the usability of a keypad. This can be achieved with a keypad according to claim 10.

A still further objective of the invention is to improve portable electronic devices comprising a key or keypad. This objective can be achieved with a portable electronic device according to any one of the claims 11 to 13.

### Advantages of the invention

The usability can be improved by changing the height of the key or that of one or more keys in the keypad. In particular, a larger key height improves the tactile feedback for the user. Further, by providing keys with variable or adjustable stiffness, the user comfort can be enhanced. Further, it may be possible to construct a key or keypad that is thinner in non-active state and thicker when being used.

The portable electronic device according to the invention can be tailored to provide a more versatile user interface than before.

The height of one or more keys in the keypad can change responsively to the user sliding a cover part in relation to the keypad in order to enable using said keypad or said portable electronic device.

The desired height or stiffness of a key or keypad may be defined by the user.

Functional keys can be hidden in the housing of the portable electronic device, and activated only when a predetermined condition is met, or when a task in performing which the key or keypad can be used.

All these aspects are believed to increase user comfort and different possibilites for the user to personalize his or her portable electronic device, or for the designer to implement his or her wild or creative ideas regarding the look'n feel and features of future portable electronic devices.

### Short description of the drawings

In the following, the invention is described in more detail with reference to the examples in Figures 1A to 7B of the accompanying drawings, of which:
Figures 1A and 1B show a top view and section of a key;
Figure 2A illustrates keypad comprising a number of keys;
Figure 2B shows electric circuit for controlling a key;
Figures 3A and 3B illustrate a key which changes its height when the electric field is switched on;
Figures 4A and 4B show what happens for a key which changes its stiffness when the electric field is switched on
Figures 5A-5C show an example wherein a keypad comprising keys the height of which changes is used;
Figures 6A and 6B illustrate another embodiment of the invention where the adjustable portion of a key is adapted to change its height in response to a shape change of a shaping element;
Figures 6C and 6D show a section of a possible shaping element;
Figure 6E shows an example of circuit adapted to change the shape of the shaping element; and
Figures 7A and 7B illustrate a possible use case of the second embodiment, wherein one or more keys can be incorporated as hidden keys into the housing of the portable electronic device.

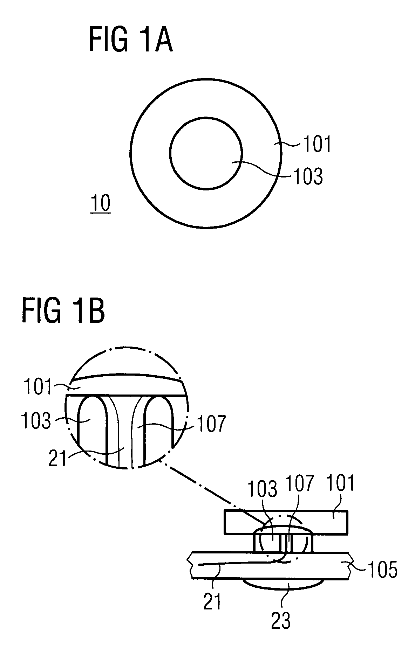

Same reference numberals refer to similar structural elements throughout Figures 1A to 7B.

### Detailed description of the invention

Figure 1A shows a top view of key 10 suitable for use in an electronic device. The key 10 comprises a cap portion 101 and an adjustable portion 103 under the cap portion 101.

Figure 1B shows a section of the key 10. The adjustable portion 103 is below the cap portion 101.

The adjustable portion 103 and the cap portion 101 are both arranged onto support 105. The support may comprise an enlarged area 23 of electrically conductive material under the adjustable portion 103. The enlarged area 23 of electrically conductive material is intended for providing a signal to the adjustable portion 103.

The mechanism in which the key 10 generates a signal when the key is being pressed can comprise a switch, especially a microswitch. Alternatively or in combination to a switch, a pressure sensor or any other touch sensor may be used. Because the solution is immaterial for understanding the present invention, these elements have been omitted from the Figures for brevity. The enlarged area 23 is preferably electrically isolated from the switch or pressure sensor in order to avoid interferences.

In a first embodiment of the invention where the adjustable portion 103 in the key 10 comprises electroactive polymer, the adjustable portion 103 may comprise a passage 107, such as a hole, for conducting means 21. The conducting means 21 may comprise copper wire. The conducting means 21 may have an enlarged end at the side of the cap portion 101 in order to enhance the passing of control signal to the adjustive portion 103. The enlarged end may be connected to the adjustable portion 103 just below the cap portion 105.

The main purpose of both the enlarged area 23 and the conducting means 21 is to cause the electric state of the adjustable portion 103. A change in the electric field through the adjustable portion 103 causes the electroactive polymer to change its shape or elastic properties. In result, the height or stiffness of the key 10 changes.

Particular examples of electroactive polymers are electrostrictive polymers and electro-rheological materials. More information on electrostrictive polymers can be found in *http:*//*136.142.88.172*/*qiw4*/*Academic*/*ME2082*/*6-10 SRI talk.pdf;* and in *http:*//*www.erg.sri.com*/*publications*/*7247-pa-98-032.pdf*. More information on electro-rheological materials (incl. Fluids) can be found in *http:*//*web.fkt.bme.hu*/*zrinyi*/*ism.htm*. Most materials presented in the references at the time of writing (December 10, 2003) can be used to carry out the present invention. Magneto-rheological fluids are also an alternative.

The adjustable portion 103 of the key 10 has the capability of changing its size or elasticity according to an electric signal coming from a control unit 28. Especially electrostrictive polymers are also known as artificial muscles. The adjustable portion 103 can also change from a gel state to an almost solid state, thereby increasing it stiffness.

Figure 2A illustrates a keypad 20 comprising a number of keys 10. The adjustable portion 103 of each key 10 is electrically connected to conducting means 21. In addition to the conducting means 21, a switch, pressure sensor, or a touch sensor may be used, then requiring separate conducting means. For brevity, these conducting means have been omitted from the Figures.

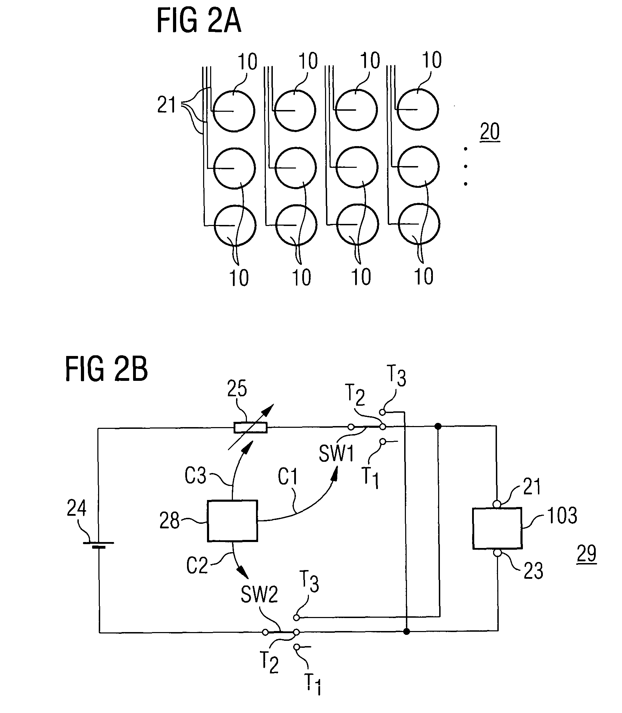

Figure 2B shows electric circuit 29 for controlling a key 10. Voltage source 23 which may be a rechargeable battery of a portable electronic device, supplies a voltage between conducting means 21 and the enlarged area 23 below the adjustable portion 103. A control unit 28, such as a processing unit of a portable electronic device, provides control signals. First control signal C1 controls the first switch SW1 and second control signal C2 controls the second switch SW2. The voltage over the adjustable portion 103 can further be controlled by the control unit 28 changing the resistance of the variable resistor 25 between the voltage source 23 and the adjustable portion 103.

Switches SW1 and SW2 are multi-position switches which both can have any of the three positions. The first position T1 is an empty terminal, in the second position T2 a first electric field is imposed on the adjustable portion 103. In the third position T3 the electric field can be reversed. Both switches SW1, SW2 are in the same position with each other.

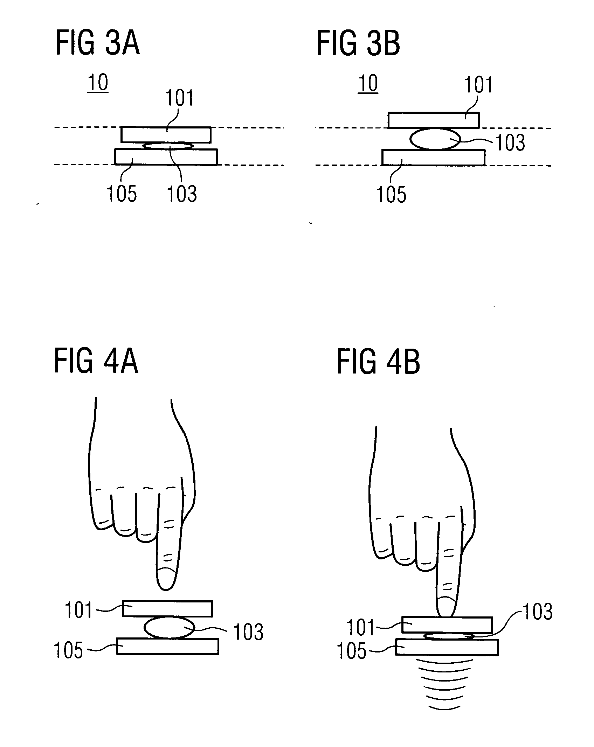

Figures 3A and 3B show what happens for a key 10 which changes its height when the electric field is switched on. In Figure 3A the height of a key 10 is at minimum because the adjustable portion 103 has been contracted. In Figure 3B the adjustable portion 103 has extended and the key 10 is higher. In this embodiment, the material in the adjusteable portion 103 would show piezoelectric behaviour.

Figures 4A and 4B show what happens for a key 10 which changes its stiffness when the electric field is switched on. The increasing stiffness is due to the fact that the viscosity or elasticity of the adjustable portion 103 changes in response to the control signal. Then the user experiences a larger resistance when pressing the key 10. In this embodiment, the material in the adjusteable portion 103 would show electro-rheologic or magneto-rheologic behaviour.

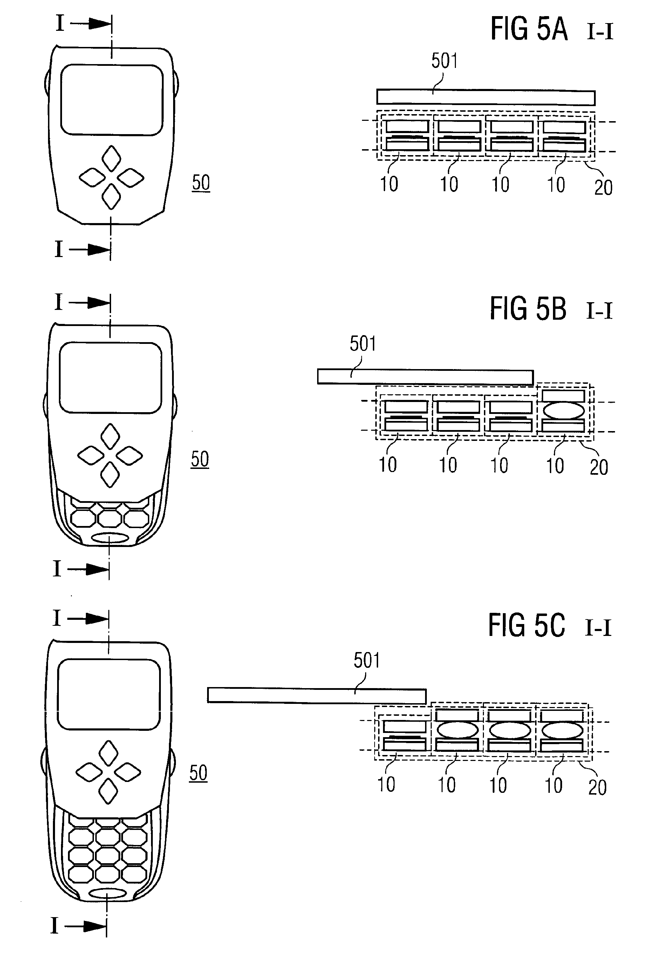

Figures 5A-5C show an example wherein a keypad 20 comprising keys 10 the height of which changes is used. The portable electronic device 50, especially a cellular phone or a Portable Digital Assistant PDA, comprises a slidable cover 501. When the slidable cover 501 covers most of the keypad 20 (in Figure 5A), the keys 10 are in contracted position. As soon as the user slides the cover, the cap portion 101 of the keys 10 which are uncovered are lifted up (in Figures 5B and 5C) by the expanding adjustable portion 103 of each key. Alternatively, the keys can be lift up when the keypad lock of the portable electronic device 50 is released.

Preferably, the mechanism shown in Figures 5A to 5C is reversible, i.e. the keys 10 return to a contracted position when the keypad lock of the portable electronic device 50 is activated or when the slide cover 501 is closed.

If the materials in the adjustable portion 103 presents in addition also electro-rheological, magneto-rheological, or piezoelectric behaviour, i.e. changes its size when its electrical state changes, a retractile effect can be achieved. Electro-rheological materials can also change their viscoelastic properties according to a particular electrical state. Other suitable materials can change their viscoelastic properties according to their magnetic state.

An advantage of using an electro-rheological material in the adjustable portion 103 is that in addition to the retractile behaviour the resistance of the keys to be pressed (i.e. stiffness) can also be calibrated according to the wishes of the user. In this embodiment, the adjustable portion 103 comprising some electrostrictive polymer provides also the necessary support to transmit the key-press from the key 10 into the support 105 where the the switch, pressure sensor, or the touch sensor would use separate conducting means are located for detecting that a key is pressed.

The calibration of stiffness of the a key 10 or the keypad 20 as a whole can be controlled by software running in the control unit 28. The software can adjust the viscoelasticity of the keys 10 according to the input of the user by mapping the desired stiffness to the electrical voltage that will produce the target visco-elastic effect. Valid inputs from the user to the software means can be "more", "less", "OK" and "cancel". A stiffness-meter could also be shown in the screen to the user, for visual feedback, during the process to indicate the relative stiffness of the keys 20 as compared to the maximum and minimum stiffness allowed.

Individual calibration of the stiffness of a key 10 can be useful when the user is not willing to have the same stiffness for all keys 10. For example, the keys 10 that a user most seldomly uses can have a higher stiffness whereas the more often used keys 10 have lower stiffness, or vice versa. Also if the keys 10 of a keypad 20 are are placed on a curved surface, then the keys 10 closer to outside boundary 10 can have less stiffness than the center keys 10, or vice versa.

Variable stiffness can also be used dynamically as a means for force-feedback during gaming. In this case the user can be allowed to set the stiffness boundaries, intervals, and increments to particular levels as opposed to a predefined or hardwired levels. On-line communication between the game application and the control unit 28 is necessary in this case.

Stiffness of keys 10 can also be responsive to application or function dependent; the relationship can be saved as different stiffness profiles in the memory of the portable electronic device 50. These stiffness profiles may be dynamically loaded upon request of the user, during the start-up of a particular application or by the execution of a game. Stiffness profiles can also be determined by an entity external to the user and downloaded to the portable electronic device or be generated dynamically by an application (e.g. a game indicates the control unit 28 to change of stiffness of the keypad, for instance, in response to an increase in the game level or speed of the user's racing car). The same principle can also be aplied to the height of the adjustable portion 103.

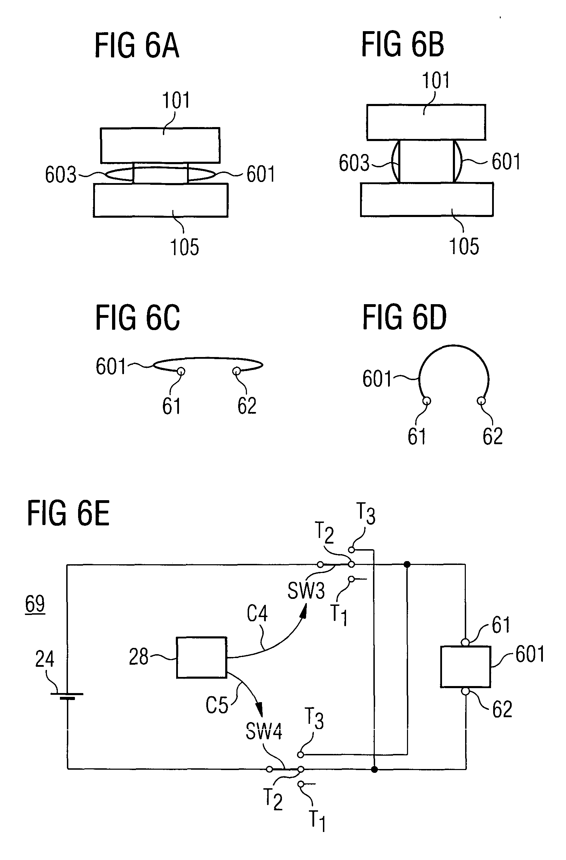

Figures 6A and 6B show another embodiment of the invention where the adjustable portion 103 of a key 10 is adapted to change its height in response to a shape change of a shaping element 601, the shaping element 601 further adapted to change its shape in response to a signal C4, C5 from the control unit 28. The main difference to the previous embodiment of the invention is that the adjustable portion 103 does not actively change its height, but height of the adjustable portion 103 is changed by the changing shape of the shaping element 601.

Figures 6C and 6D show a section of a possible shaping element 601. The shaping element 601 preferably comprises shape-memory material which has a two or three possible states. In Figure 6C the shaping element 601 has a contracted shape and in Figure 6D it has an extended shape. The adjustable portion 103 changes its height in response to a shape change of a shaping element 601. The shape change of the shaping element 601 is responsive to a control signal. The control signal may be led to shaping element 601 via contactors 61 and 62 on two sides of the shaping element.

Figure 6E shows an example of electric circuit 69 adapted to change the shape of the shaping element 601. A control unit 28, such as the processing unit of a portable electronic device, controls the positions of two switches SW3 and SW4. The fourth control signal C4 controls the third switch SW3 and fifth control signal C5 controls the fourth switch SW4.

Switches SW3 and SW4 are multi-position switches, both of which can have any of the three positions. The first position T1 is an empty terminal, in the second position T2 a first electric field is imposed on the adjustable portion 103. In the third position T3, the electric field can be reversed.

Particular examples of materials suitable for the shaping element 601 include materials that are shape-memory materials. Especially shape memory alloys and shape memory polymers are suitable.

The shaping elements 601 have independent electrical contacts 61, 62. The layout of the keypad 20 can be altered to match a particular profile, for instance, by alternating rows and columns of keys 10 to different levels. The change in the keypad 20 profile can be triggered by a particular action, initiated by the user or the control unit 28 (e.g. given application start-up, game application request).

The shaping element 601 is preferably placed between the electrical contacts 61, 62 in the support 105, and cap portion 101 of a key 20. The cross-section of the shaping element 601 may have the shape of an arch. The two angular arms on its two sides can be attached to a support 105 through the electrical contacts 61, 62. When a key 10 is to be raised, the arms of the shaping element 601 are straightened, increasing the height of the arch, and effecting an increase in the height of the key 10. By effecting an increase in the height of the key, the adjustable portion 103 may contribute to the increase in the height. The adjustable portion 103 can be arranged to offer support for the cap portion 102.

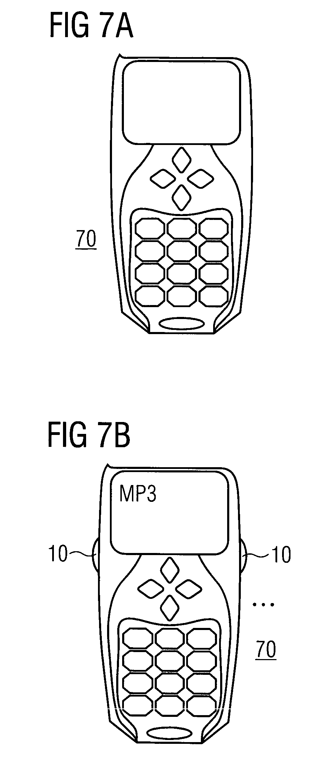

Figures 7A and 7B show a possible use case of the second embodiment . One or more keys 10 can be incorporated as hidden keys into the housing of the portable electronic device 70. Then it or they can be raised from the cover of the housing of the electronic device 70 when necessary. An even better camouflage can be achieved if the cover and keys 10 are wrapped in an elastic socket. The elastic socket will then cover the key 10 making it unnoticeable when retracted. The socket is elastically deformed when the hidden key will be raised according to the use of a particular application/function of the phone or upon request of the user.

The support 105 - such as the cover of the electronic device 70 - may further comprise piezo-chromic material that under pressure of a raised key might undergo a color change defining the raised key. An article defining some examples of such materials can be found at *http:*//*www.mrw.interscience.wiley.com*/*kirk*/*articles*/*piezdric. a01*/*frame.html.*

The shaping element 601 may comprise electro-rheological material. In this case the effecting of the shape change of the shaping element 601 would be achieved by modifying the stiffness of the shaping element 601. Then a visco-elastic returning force of the adjustable portion 103 would raise the cap portion 101.

Even though in the first and second embodiments, the use of a double electrical circuitries may be advantageous, it is by no means necessary. In a basic case, the first electrical circuitry provides a key 10 in a keypad 20 with control signal, for example a changing voltage that alters the stiffness and/or height of the adjustable portion 103. The second circuitry changes its status according to whether a key has been pressed.

Some electro-active polymers are, however, able to act as a touch sensors as well as a piezo-electric actuators. In this way, a key 10 need only to comprise a cap portion 101, an adjustable portion 103, both arranged onto a support 105. A particular example of a suitable material belonging to the class of electrostrictive graft elastomeres can be found at *http:*//*www.azom.com*/*details.asp?ArticleID=885.*

For all embodiments of the invention, the control unit 28 can be adapted to change the height of a key 10 or stiffness of a key 10 responsive to different actions initiated by the user or the portable electronic device 50, 70. Particular examples of such actions comprise initiating the execution of an application or change of level when the user is playing a game.

The control means 28 may be comprise means for storing a user-specific calibration for the height or stiffness of a key for personal calibration. This enhances user comfort even more.

## Claims

1. A key (10) suitable for use in an electronic device, **comprising**: a cap portion (101) and an adjustable portion (103) under the cap portion (101, both arranged onto a support (105), wherein the said adjustable portion (103) is adapted to change its height or stiffness in response to a signal (C1, C2, C3, C4, C5) from a control unit (28).

2. A key (10) of claim 1, **wherein**: said adjustable portion (103) comprises an electroactive polymer.

3. A key (10) of claim 2, **wherein**: said electroactive polymer is an electrostrictive polymer.

4. A key (10) of claim 2, **wherein**: electroactive polymer is an electro-rheological material.

5. A key (10) of claim 1, **wherein**: said adjustable portion (103) is adapted to change its height in response to a shape change of a shaping element (601), the shaping element (601) further adapted to change its shape in response to a signal (C4, C5) from the control unit (28).

6. A key (10) of claim 5, **wherein**: said shaping element (601) comprises shape-memory material.

7. A key (10) of claim 6, **wherein**: said shape-memory material is a shape memory alloy.

8. A key (10) of claim 6, **wherein**: said shape-memory material is a shape-memory polymer.

9. A key (10) of any of the preceding claims, **wherein**: the support (105) comprises piezo-chromic material.

10. A keypad (20) comprising a plurality of keys (10) according to any one of the preceding claims 1 to 9.

11. A portable electronic device (50, 70) **comprising**: a key (10) according to any one of claims 1 to 9, or a keypad (20) according to claim 10; and a control unit (28), wherein the control unit (28) is adapted to generate a signal (C1, C2, C3, C4, C5) causing the said adjustable portion (103) to change its height or stiffness in response to a mode change of the portable electronic device (50, 70).

12. A portable electronic device (50) of claim 11, **wherein**: said mode change corresponds to sliding a cover part (501) in relation to the keypad (20) to enable using said keypad (20) or said portable electronic device (50).

13. A portable electronic device (70) of claim 11, **wherein**: said mode change corresponds to performing such a task in said portable electronic device (70), in performing of which the key (10) or the keypad (20) can be used, or meeting a predetermined condition.

## Amended claims

### Amended claims in accordance with Rule 86(2) EPC.

**1.** A key (10) suitable for use in an electronic device, **comprising:** a cap portion (101) and an adjustable portion (103) under the cap portion (101, both arranged onto a support (105), wherein the said adjustable portion (103) is adapted to change:
- its height by changing its thickness; or
- its stiffness by changing its viscoelastic property; in response to a signal (C1, C2, C3, C4, C5) from a control unit (28).

**2.** A key (10) of claim 1, **wherein:** said adjustable portion (103) comprises an electroactive polymer.

**3.** A key (10) of claim 2, **wherein:** said electroactive polymer is an electrostrictive polymer.

**4.** A key (10) of claim 2, **wherein:** electroactive polymer is an electro-rheological material.

**5.** A key (10) of claim 1, **wherein:** said adjustable portion (103) is adapted to change its height in response to a shape change of a shaping element (601), the shaping element (601) further adapted to change its shape in response to a signal (C4, C5) from the control unit (28).

**6.** A key (10) of claim 5, **wherein:** said shaping element (601) comprises shape-memory material.

**7.** A key (10) of claim 6, **wherein:** said shape-memory material is a shape memory alloy.

**8.** A key (10) of claim 6, **wherein:** said shape-memory material is a shape-memory polymer.

**9.** A key (10) of any of the preceding claims, **wherein:** the support (105) comprises piezo-chromic material.

**10.** A keypad (20) comprising a plurality of keys (10) according to any one of the preceding claims 1 to 9.

**11.** A portable electronic device (50, 70) **comprising:** a key (10) according to any one of claims 1 to 9, or a keypad (20) according to claim 10; and a control unit (28), wherein the control unit (28) is adapted to generate a signal (C1, C2, C3, C4, C5) causing the said adjustable portion (103) to change its height or stiffness in response to a mode change of the portable electronic device (50, 70).

**12.** A portable electronic device (50) of claim 11, **wherein:** said mode change corresponds to sliding a cover part (501) in relation to the keypad (20) to enable using said keypad (20) or said portable electronic device (50).

**13.** A portable electronic device (70) of claim 11, **wherein:** said mode change corresponds to performing such a task in said portable electronic device (70), in performing of which the key (10) or the keypad (20) can be used, or meeting a predetermined condition.
